# EUROPÄISCHE PATENTSCHRIFT

(11) **EP 1 164 456 B1**
(45) Veröffentlichungstag und Bekanntmachung des Hinweises auf die Patenterteilung: **10.10.2007**
(21) Anmeldenummer: 01110778.6
(22) Anmeldetag: 03.05.2001
(51) Int. Cl.: G06F 1/00

(54) **Software-Schutzmechanismus**
Software protection mechanism
Mécanisme pour la protection de logiciels

(30) Priorität: 15.05.2000 DE 10023820
(43) Veröffentlichungstag der Anmeldung: 19.12.2001
(73) Patentinhaber: SIEMENS AKTIENGESELLSCHAFT, 80333 München (DE)
(72) Erfinder: Hartinger, Andreas, Dipl.-Ing., 91052 Erlangen (DE); Kiesel, Martin, Dipl.-Ing., 91099 Poxdorf (DE)

(56) Entgegenhaltungen:
- EP-A- 0 613 073
- WO-A-99/39256
- DE-A- 4 019 652
- JP-A- 2000 099 403
- US-A- 4 757 534
- US-A- 5 182 770
- US-A- 2001 008 016
- "Machinelle Übersetzung des JP 2000-099403" 21. September 2005 (2005-09-21),

## Beschreibung

Die Erfindung bezieht sich auf ein Verfahren zur Vermeidung der unerlaubten Benutzung von Softwarekomponenten für ein Steuerungsgerät unter Benutzung einer eineindeutigen Hardwarekennung.

Es ist heutzutage üblich, Software-Schutzmechanismen an bestehende Hardwarekomponenten zu koppeln. Eine Möglichkeit besteht darin, bei der Lieferung der Softwarelizenz die Seriennummer der Hardwarekomponente fest in die Software einzutragen, d.h. die Software ist auf einer anderen Hardware nicht ablauffähig. Dies hat den Nachteil, dass beim Ausfall der Hardware die Software nicht einfach auf eine andere Hardware transferiert und dort zum Ablauf gebracht werden kann. Im Servicefall ist somit ein aufwendiger Hardwareaustausch erforderlich.

Eine andere Möglichkeit der Koppelung des Softwareschutzes an die Hardware besteht darin, einen Dongle, d.h. eine zusätzliche Hardwarekomponente zu verwenden. Der Dongle dient für einen Anwender als Zugangsschlüssel, um die Software auf der Hardware, mit der der Dongle verbunden ist, ablaufen lassen zu können. Wird der Dongle mit einer anderen Hardware verbunden, so ist die Software auf dieser anderen Hardware ablauffähig. Der Dongle kann allerdings immer nur mit einer Hardware gleichzeitig verbunden sein.

Aus der EP 0 940 743 A1 ist es bekannt, Dongles, insbesondere bei Laptops oder Notebook-Computern, einzusetzen, um den unautorisierten Zugriff auf Softwareprogramme zu verhindern.

Aus der US 5182 770 ist eine Erzeugung einer Identifizierungsnummer durch einen Verschlüsselungsalgorithmus aus einer Hardwarekennung eines Dongles und einer Lizenzinformation und die entsprechende Entschlüsselung und die dadurch erzielte Generierung der Hardwarekennung und deren Vergleich mit der auf dem Dongle gespeicherten Hardwarekennung bekannt.

Aus der JP2000099403 ist die Bereitstellung eines computerlesbaren Datenträgers bekannt, auf dem eine eineindeutige Hardwarekennung zusätzlich zum eigentlichen Datengehalt gespeichert sind wobei der Datengehalt durch Inhaltsverschlüsselung abhängig von der Hardwarekennung geschützt wird.

Der Nachteil bei der Verwendung von Dongles liegt darin, dass ein zusätzliches Hardware-Teil benötigt wird, das nur den Zweck hat, einen unautorisierten Zugriff zu verhindern. Dongles haben zusätzlich den Nachteil, dass bei mehreren Lizenzgebern auch mehrere Dongles benötigt werden.

Der Erfindung liegt daher die Aufgabe zu Grunde, einen sicheren, beim Betrieb durch autorisierte Benutzer nicht einschränkenden und im Servicefall keinen aufwendigen Hardwareaustausch erfordernden Zugangsschutz für Softwarekomponenten zur Verfügung zu stellen, wobei als Dongleäquivalent kein zusätzliches Hardware-Teil benötigt wird

Gemäß der Erfindung wird diese Aufgabe nach einem Verfahren mit den Merkmalen des Anspruchs 1 gelöst.

Aus einer nicht mehr veränderbaren Hardwarekennung eines computerlesbaren Datenträgers und zusätzlichen Lizenzinformationen über einen Verschlüsselungsalgorithmus wird eine Identifizierungsnummer für die eineindeutige Zuordnung von Hardwarekennung und Lizenzinformationen erzeugt, die dem Steuerungsgerät, auf dem die Softwarekomponenten ablaufen, in Form des computerlesbaren Datenträgers zugeführt wird.

Ein wesentlicher Vorteil der Erfindung liegt darin, dass die eineindeutige Hardwarekennung, die nur vom Hersteller beim Herstellungsprozess des computerlesbaren Datenträgers auf diesen Datenträger aufgebracht werden kann, in einen Bereich dieses Datenträgers geschrieben wird, der im Nachgang nur noch lesbar, aber nicht mehr beschreibbar ist. Die Hardwarekennung wird nur einmal vergeben und ist somit eineindeutig. Da der Bereich, der die Hardwarekennung enthält, nur lesbar, aber nicht beschreibbar ist, kann die Hardwarekennung (z.B. eine Seriennummer) nicht auf einen anderen Datenträger dieses Typs übertragen werden. Ein Clonen der Datenträger ist somit nicht möglich. Neben der Hardwarekennung enthält der computerlesbare Datenträger weitere Nutzdatenbereiche, die sehr wohl beschreibbar sind. Daraus ergibt sich ein weiterer Vorteil der vorliegenden Erfindung.

Der computerlesbare Datenträger trägt auf seinem Nutzdatenbereich Informationen, die sowieso für den Betrieb eines Steuerungsgeräts verwendet werden können. Für den Betrieb von Steuerungen kann der computerlesbare Datenträger in seinem Nutzdatenbereich z.B. die komplette Run-Time-Software und/oder Parametrierungs- bzw. Konfigurationsinformationen, aber auch Applikationen enthalten. Der computerlesbare Datenträger wird mit seinen Nutzdaten somit sowieso für den Betrieb der Steuerung benötigt und stellt deshalb keine zusätzliche Hardwarekomponente dar, die nur als Zugangsschutzmechanismus Verwendung findet.

Ein weiterer Vorteil der vorliegenden Erfindung liegt darin, dass im Ersatzteilfall durch Austauschen des computerlesbaren Datenträgers die weitere Benutzung der Steuerung sehr leicht und sehr schnell gewährleistet ist, da der computerlesbare Datenträger nicht fest an die zugrundeliegende Hardware des Lizenznehmers gebunden ist. Wenn sich ein Anwender ein Backup des aktuellen computerlesbaren Datenträgers der eingangs genannten Art erstellt hat, lässt sich z.B. eine Steuerung mit der letztgültigen Parametrierung bzw. Konfigurierung, aber der aktuellen Version der Run-Time-Software sehr schnell wieder in Betrieb setzen. Dieses Backup enthält natürlich nur dieselben Nutzdaten des zugrunde liegenden computerlesbaren Datenträgers. Die vom Hersteller des computerlesbaren Datenträgers auf diesen eingebrachten Hardwarekennungen sind natürlich unterschiedlich und können nicht kopiert werden.

Ein weiterer Vorteil der vorliegenden Erfindung liegt in der einfachen Vermarktung bzw. Distribution der zu schützenden Softwarekomponenten. Der Käufer erwirbt einen computerlesbaren Datenträger der eingangs genannten Art, der eine Identifizierungsnummer enthält, die aus der eineindeutigen Hardwarekennung des vorliegenden computerlesbaren Datenträgers und dem gewünschten Lizenzumfang durch einen Verschlüsselungsalgorithmus generiert wurde. Beim Gebrauch des computerlesbaren Datenträgers wird die Identifizierungsnummer softwaremäßig von dem Steuerungsgerät abgefragt, überprüft und die Zugangsberechtigung gegeben bzw. abgelehnt. Der Anwender muss somit weder die Seriennummer einer vorliegenden Hardware noch muss er eine zusätzliche Hardwarekomponente, z.B. einen Dongle, beziehen, um die erworbenen Softwarekomponenten zum Ablaufen zu bringen. Darüber hinaus bleibt dem Anwender im Ersatzteilfall ein neues Lizenzhandling erspart, da der Inhalt des computerlesbaren Datenträgers (bis auf die eineindeutige Hardwarekennung) nicht fest ist und somit ein einfaches Umtauschen möglich ist.

Eine erste vorteilhafte Ausgestaltung der Erfindung liegt darin, dass bei der Erzeugung der Identifizierungsnummer auch Zusatzinformationen verwendet werden. Dadurch, dass der Verschlüsselungsalgorithmus, der die Identifizierungsnummer erzeugt, als Input neben der Hardwarekennung und der Lizenzinformation auch noch weitere Zusatzinformationen verwendet, kann durch die Identifizierungsnummer sehr leicht ein Bundling von Informationen erreicht werden. Es kann z.B. ein Bundling von Hardwarekennung, Lizenzinformation und Lizenzgeber stattfinden.

Eine weitere vorteilhafte Ausgestaltung der Erfindung liegt darin, dass zu einer Hardwarekennung eine oder mehrere Identifizierungsnummern generiert werden. Dadurch ist es möglich, dass ein Anwender Zugangsberechtigungen von Softwarekomponenten nicht nur eines Lizenzgebers, sondern von mehreren unterschiedlichen Lizenzgebern durch den Erwerb eines einzigen computerlesbaren Datenträgers der eingangs genannten Art erhalten kann. Für den Anwender ergibt sich daraus der Vorteil, dass die Zugangsautorisierung zu Softwarekomponenten von unterschiedlichen Lizenzgebern für ihn in einer einheitlichen und einfachen Art und Weise erfolgt.

Eine weitere vorteilhafte Ausgestaltung der Erfindung liegt darin, dass die Identifizierungsnummern in einen lese- und schreibbaren Bereich des computerlesbaren Datenträgers hinterlegt werden. Dadurch können Softwareroutinen sehr leicht auf sie zugreifen und die dazugehörigen Lizenzen, d.h. Zugangsberechtigungen, überprüfen.

Eine weitere vorteilhafte Ausgestaltung der Erfindung liegt darin, dass auf dem computerlesbaren Datenträger auch Lizenzinformationen und/oder Zusatzinformationen hinterlegt werden. Diese Informationen sind vom Anwender auslesbar und geben ihm einen sehr einfachen und transparenten Überblick über die Zugriffsmöglichkeiten auf die jeweiligen Softwarekomponenten, die er auf einer Steuerung zur Ausführung bringen kann.

Eine weitere vorteilhafte Ausgestaltung der Erfindung liegt darin, dass als Datenträger eine Komponente verwendet wird, die sowieso schon für den Betrieb der Anlage vorhanden ist. Dadurch ist sichergestellt, dass für den Schutzmechanismus keine zusätzliche Hardware-Komponente benötigt wird. Das Handling am Steuerungsgerät wird dadurch erleichtert, aber auch Lagerraum und Lagerkosten werden eingespart.

Eine weitere vorteilhafte Ausgestaltung der Erfindung liegt darin, dass als Datenträger eine Memory-Card verwendet wird. Eine Memory-Card wird üblicherweise ohnehin bei Steuerungsgeräten eingesetzt und kann in einfacher Weise in den dafür vorgesehenen Schacht eingeschoben werden.

Eine weitere vorteilhafte Ausgestaltung der Erfindung liegt darin, dass als Datenträger eine MMC-Speicherkarte verwendet wird. MMC-Speicherkarten (das Akronym MMC steht für Multi Media Card) sind aufgrund ihrer Größe und Form als Träger von Informationen sehr geeignet. MMC-Speicherkarten sind ihrem Aussehen nach vergleichbar mit einer kleinen SIM-Karte, wie sie bei den Handys bekannt sind.

Eine weitere vorteilhafte Ausgestaltung der Erfindung liegt darin, dass der Datenträger auch als Schlüssel ausgebildet sein kann, der Informationen enthält. Durch dieses Bundling von Hardware und informationstechnischen Mitteln wird der Zugangsschutz erhöht.

Ein Ausführungsbeispiel der Erfindung ist in der Zeichnung dargestellt und wird im folgenden erläutert. Dabei zeigen:
- FIG 1: das Zusammenwirken von Hardwarekennung und Lizenzinformation, dem Verschlüsselungsalgorithmus und der Identifizierungsnummer,
- FIG 2: das Zusammenwirken von Hardwarekennung, Lizenzinformation und Zusatzinformation, dem Verschlüsselungsalgorithmus und der Identifizierungsnummer,
- FIG 3: die Speicherung einer Identifizierungsnummer auf einer MMC-Speicherkarte,
- FIG 4: eine MMC-Speicherkarte, die mehrere Identifizierungsnummern enthält,
- FIG 5: den inhaltlichen Aufbau einer MMC-Speicherkarte,
- FIG 6: die zentrale Stellung der MMC-Speicherkarte als Bindeglied zwischen Verschlüsselungs- und Entschlüsselungsalgorithmus und
- FIG 7: die zentrale Stellung der MMC-Speicherkarte in einer weiteren Identifizierungsmethode.

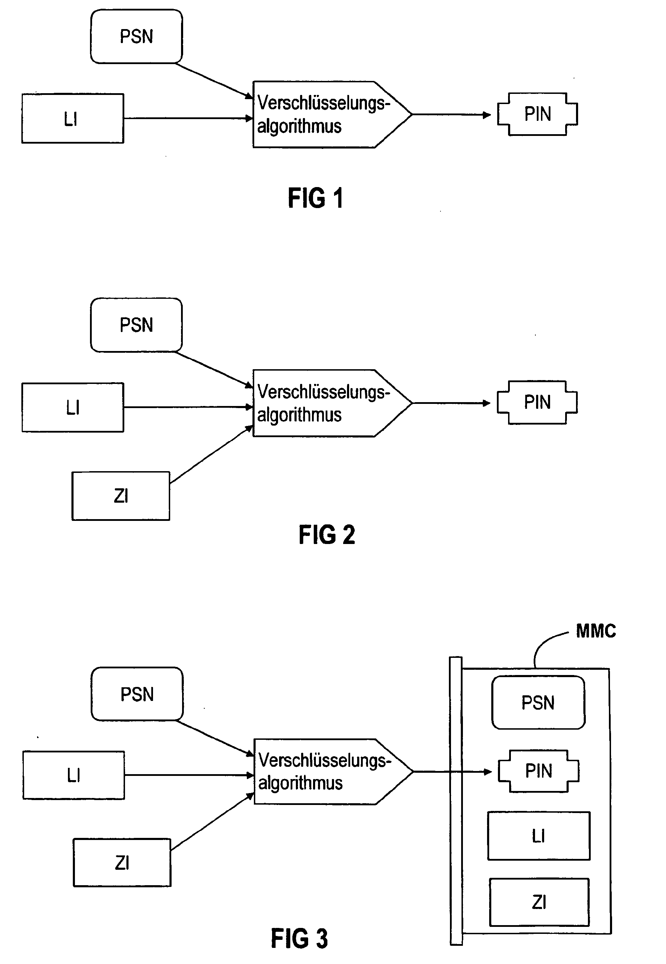

In der Darstellung gemäß FIG 1 wird in Form eines Übersichtsbildes das Ein-/Ausgabeverhalten des Verschlüsselungsalgorithmusses dargestellt. Der Verschlüsselungsalgorithmus selbst wird hierbei als frei vorgebbar angesehen, Beispiele für derartige Algorithmen sind in Gerd W. Wähner: "Datensicherheit und Datenschutz", 1993, VDI-Verlag, auf den Seiten 219 bis 240 erwähnt.

Auf der linken Seite der Darstellung befinden sich die Inputgrößen für den Verschlüsselungsalgorithmus, nämlich die Hardwarekennung PSN und die Lizenzinformation LI. Auf der rechten Seite der Darstellung wird das Ausgabeverhalten, d.h. das Ergebnis des Algorithmus, dargestellt. Der Verschlüsselungsalgorithmus liefert als Output die Identifizierungsnummer PIN. Das Input- und Output-Verhalten des Algorithmus wird durch selbsterklärende Pfeilrichtungen dargestellt.

In der Darstellung gemäß FIG 2 wird die Darstellung aus FIG 1 um einen dritten Input-Parameter für den Verschlüsselungsalgorithmus, nämlich weiterer Zusatzinformationen ZI ergänzt. In der Darstellung gemäß FIG 2 wird die Identifizierungsnummer PIN vom Algorithmus unter Verwendung der Hardwarekennung PSN der Lizenzinformation LI und weiterer Zusatzinformationen ZI (z.B. einer Lieferanten-Identifizierung) generiert. Auch in dieser Darstellung wird der Verschlüsselungsalgorithmus als gepfeilter Block dargestellt, die dargestellten Pfeile deuten durch ihre Pfeilrichtung das Ein-/Ausgabeverhalten des Algorithmusses an.

Die Darstellung gemäß FIG 3 stellt eine Erweiterung von FIG 2 dar. In der Mitte der Darstellung ist wieder der Verschlüsselungsalgorithmus ebenfalls als gepfeilter Block dargestellt, auf der linken Bildhälfte befinden sich die Input-Parameter für den Algorithmus, nämlich Hardwarekennung PSN, die Lizenzinformation LI und die Zusatzinformation ZI. Auf der rechten Seite des Bildes ist dargestellt, dass sich die Identifizierungsnummer PIN, die vom Verschlüsselungsalgorithmus generiert wird, auf einer MMC-Speicherkarte MMC befindet. Weiterhin sind auf der MMC-Speicherkarte die Hardwarekennung PSN, die Lizenzinformation LI und Zusatzinformationen ZI aufgebracht. Die Hardwarekennung PSN befindet sich auf einem Bereich der MMC-Speicherkarte, der nur gelesen und nicht kopiert werden kann. Die Hardwarekennung PIN, die Lizenzinformation LI und die Zusatzinformationen ZI sind dagegen auf einem lese- und schreibbaren Bereich der MMC-Speicherkarte hinterlegt. Durch die Identifizierungsnummer PIN erfolgt das "Bundling", d.h. die logische Bündelung einer erworbenen Softwarelizenz sowie des dazugehörigen Lieferanten an die eineindeutige Hardwarekennung PSN. Die Zusatzinformationen ZI haben bei diesem Bundling optionalen Charakter.

Beim Hochlauf bzw. beim Betrieb der zu schützenden Softwarekomponenten überprüft eine Softwareroutine die Autorisierung. Nach dem Hochlauf der Softwarekomponenten erfolgt die Authorisierungsüberprüfung zyklisch. Die MMC-Speicherkarte ist in ihrer Größe und Form einer kleinen SIM-Karte vergleichbar, die bei der Verwendung von Handys eingesetzt wird. Auch in der Darstellung gemäß FIG 3 deuten die Pfeilrichtungen das Ein-/Ausgabeverhalten des Informationsflusses für den Verschlüsselungsalgorithmus an.

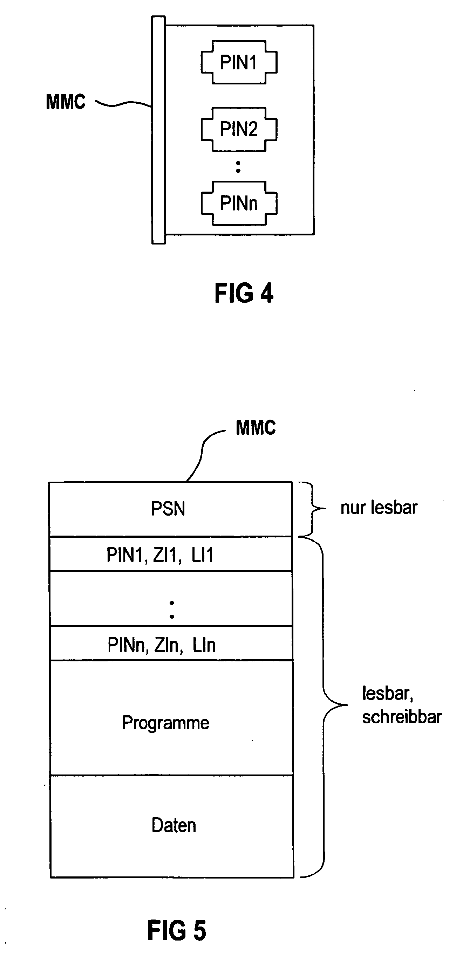

In der Darstellung gemäß FIG 4 wird gezeigt, dass eine MMC-Speicherkarte mehr als eine Identifizierungsnummer PIN1 - PINn enthalten kann. Eine MMC-Speicherkarte kann somit für jeden Lizenzgeber eine eigene separate Identifizierungsnummer PIN1 - PINn enthalten. Durch jede dieser Identifizierungsnummern PIN1 - PINn erfolgt bezüglich jedes einzelnen Lizenzgebers ein "Bundling" für die jeweils erworbene Lizenz an die eineindeutige Hardwarekennung PSN. Typische Lizenzgeber sind Original Equipment Manufacturer (OEM), d.h. z.B. Maschinenhersteller, die solche Softwarekomponenten, die geschützt werden sollen, in ihren Anlagen bzw. Produkten mit ausliefern.

Darstellung gemäß FIG 5 zeigt den inhaltlichen Aufbau einer MMC-Speicherkarte. Die MMC-Speicherkarte ist in Form von Blöcken aufgeteilt. Der oberste Block ist der Card Identification Block, der vom MMC-Speicherkartenhersteller beschrieben wird. Dieser Card Identification Block enthält die eineindeutige Hardwarekennung PSN. Dieser Bereich ist nur noch lesbar (von der Überprüfungs-Software) und nicht mehr kopierbar. In den nächsten Blöcken befinden sich jeweils die Lizenzinformationen LI1 - LIn, die Zusatzinformationen ZI1 - ZIn, sowie die vom Verschlüsselungsalgorithmus generierten Identifizierungsnummern PIN1 - PINn. Weiterhin können sich auf einer MMC-Speicherkarte Programme und Daten befinden.

Bis auf den Block, der die eineindeutige Hardwarekennung PSN enthält und der nur lesbar, aber nicht kopierbar ist, sind alle anderen Blöcke einer MMC-Speicherkarte lesbar, schreibbar und kopierbar.

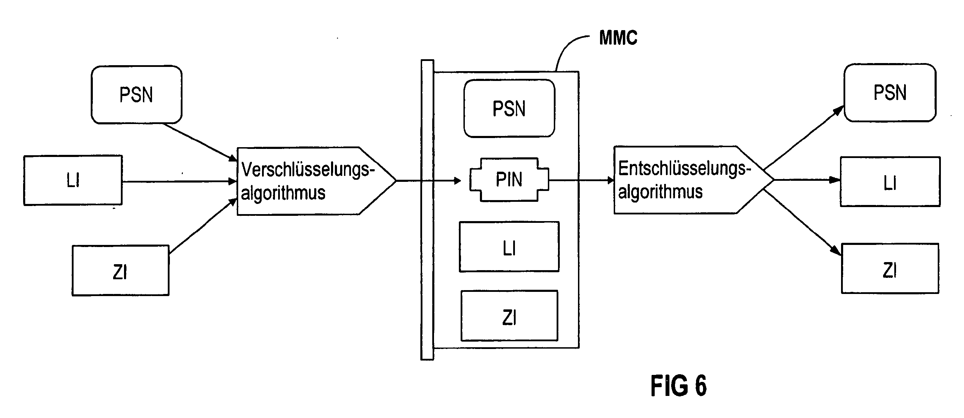

In der Darstellung gemäß FIG 6 ist in der Mitte eine MMC-Speicherkarte dargestellt, welche die Hardwarekennung PSN, die Identifizierungsnummer PIN, die Lizenzinformation LI sowie Zusatzinformationen ZI enthält. Auf der linken Seite der Abbildung ist dargestellt, wie aus dem Verschlüsselungsalgorithmus die Identifizierungsnummer PIN erzeugt wird. Eingabeparameter für den Verschlüsselungsalgorithmus zum Erzeugen der PIN sind die Hardwarekennung PSN, die Lizenzinformation LI sowie die Zusatzinformationen ZI. Die Zusatzinformationen ZI werden dabei nur optional benötigt. Zur Zugangsauthorisierung wird nun die Identifizierungsnummer PIN auf der MMC-Speicherkarte von einer Softwareroutine gelesen und mit Hilfe eines Entschlüsselungsalgorithmusses überprüft. Der Entschlüsselungsalgorithmus generiert aus der Identifizierungsnummer PIN die eineindeutige Hardwarekennung PSN, die Lizenzinformation LI sowie (soweit vorhanden) Zusatzinformationen ZI. Die Zugangsauthorisierung mit Hilfe des Entschlüsselungsalgorithmusses geschieht beim Hochlauf des Systems, d.h. der Softwarekomponenten, aber auch zyklisch im Betrieb der jeweiligen Softwarekomponenten. Stimmt die durch den Entschlüsselungsalgorithmus erhaltenen PSN mit der auf der MMC-Speicherkarte überein, wird die Benutzung der Softwarekomponente erlaubt.

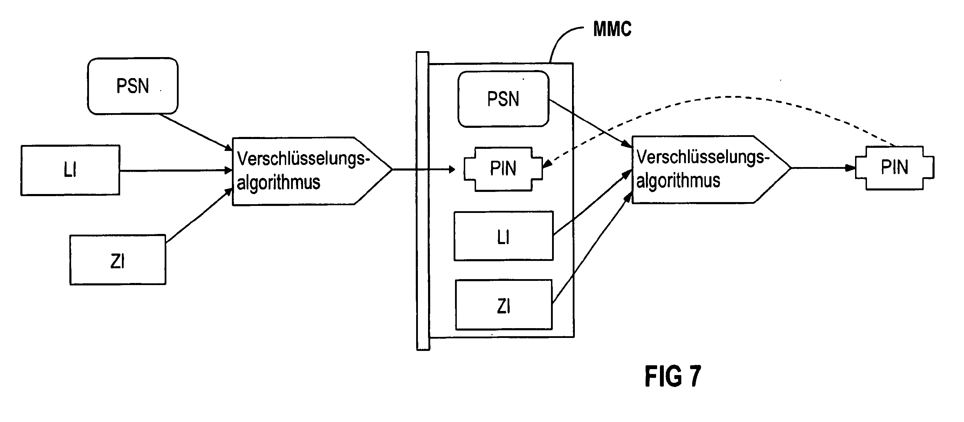

In der Darstellung gemäß FIG 7 wird eine weitere Möglichkeit der Autorisierungsüberprüfung gezeigt. Auch in FIG 7 ist in der Mitte eine MMC-Speicherkarte dargestellt, die die Hardwarekennung PSN, die Identifizierungsnummer PIN, die Lizenzinformation LI sowie Zusatzinformationen ZI enthält. Auf der linken Seite der Abbildung ist dargestellt, wie aus dem Verschlüsselungsalgorithmus die Identifizierungsnummer PIN erzeugt wird. Eingabeparameter für den Verschlüsselungsalgorithmus zum Erzeugen der PIN sind die Hardwarekennung PSN, die Lizenzinformation LI sowie die Zusatzinformationen ZI. Die Zusatzinformationen ZI werden dabei nur optional benötigt. Zur Zugangsauthorisierung wird nun aus der HardwareKennung PSN, aus der Lizenzinformation LI und optional aus der Zusatzinformation ZI durch den schon eingangs verwendeten Verschlüsselungsalgorithmus die Identifizierungsnummer PIN generiert. Diese erhaltene PIN wird mit der PIN auf der MMC-Speicherkarte überprüft (dargestellt durch einen gestrichelten Pfeil). Stimmen sie überein, wird die Benutzung der Softwarekomponente erlaubt. Die Überprüfung geschieht zum einen beim Hochlauf des Systems, aber auch zyklisch im Betrieb der jeweiligen Softwarekomponenten.

## Patentansprüche

1. Verfahren zum Vermeiden der unerlaubten Benutzung von Softwarekomponenten für eine Rechenanlage oder ein Steuerungsgerät, mit den Schritten:
- Bereitstellen eines computerlesbaren Datenträgers, auf dem nicht mehr veränderbar a) eine eineindeutige Hardwarekennung des Datenträgers gespeichert ist und auf dem in einem Nutzdatenbereich b) Lizenzinformationen (LI, LI1 - LIn), c) zumindest eine über einen Verschlüsselungsalgorithmus aus der Hardwarekennung (PSN) und den Lizenzinformationen (LI, LI1 - LIn) erzeugte Identifizierungsnummer (PIN), und d) eine komplette Run-Time-Software und/oder Parametrisierungsinformationen und/oder Konfigurationsinformationen und/oder Applikationen gespeichert sind,
- Überprüfen der Autorisierung durch α) entweder Entschlüsseln der zumindest einen Identifizierungsnummer (PIN) mithilfe eines Entschlüsselungsalgorithmus und **dadurch** Generieren einer eineindeutigen Hardwarekennung (PSN), Vergleichen der so gewonnenen eineindeutigen Hardwarekennung (PSN) mit der auf dem computerlesbaren Datenträger gespeicherten Hardwarekennung (PSN), oder β) Verschlüsseln der eineindeutigen Hardwarekennung (PSN) und der Lizenzinformationen (PLI, LI1 - LIn) auf dem computerlesbaren Datenträger mithilfe eines Verschlüsselungsalgorithmus und Generieren der Identifizierungenummer (PIN), Vergleichen der so gewonnenen Identifizierungsnummer (PIN) mit der auf dem computerlesbaren Datenträger gespeicherten Identifizierungsnummer,
- Erlauben der Benutzung der Softwarekomponente im Falle eines positiven Ausgangs des Vergleichs.

2. Verfahren nach Anspruch 1, **dadurch gekennzeichnet, dass** auf dem computerlesbaren Datenträger auch Zusatzinformationen (ZI, ZI1 - ZIn) hinterlegt sind, die für die Erzeugung der Identifizierungsnummer (PIN) verwendet werden.

3. Verfahren nach einem der vorhergehenden Ansprüche, **dadurch gekennzeichnet, dass** als Datenträger eine Memory-Card oder eine MMC-Speicherkarte (MMC) verwendet wird.

4. Verfahren nach einem der vorhergehenden Ansprüche, **dadurch gekennzeichnet, dass** der Datenträger als Schlüssel ausgebildet ist, der Informationen enthält.

5. Computerlesbarer Datenträger, auf dem:
- nicht mehr veränderbar a) eine eineindeutige Hardwarekennung (PSN) gespeichert ist, und mit:
- einem Nutzdatenbereich, auf dem gespeichert sind:
b) Lizenzinformationen (LI, LI1 - LIn),
c) zumindest eine über einen verschlüsselungsalgorithmus aus der eineindeutigen Hardwarekennung, (PSN) und den Lizenzinformationen (LI, LI1 - LIn) erzeugte Identifizierungsnummer (PIN),
d) eine komplette Run-Time-Software und/oder Parametrierungsinformationen und/oder Konfigurationainformationen und/oder Applikationen.

6. Computerlesbarer Datenträger nach Anspruch 5, **dadurch gekennzeichnet, dass** auf dem computerlesbaren Datenträger auch Zusatzinformationen (ZI, ZI1 - ZIn) hinterlegt sind, die für die Erzeugung der Identifizierungsnummer (PIN) verwendet wurden.

7. Computerlesbarer Datenträger nach Anspruch 5 oder 6, **dadurch gekennzeichnet, dass** der Datenträger eine Memory-Card oder eine MMC-Speicherkarte (MMC) ist.

8. Computerlesbarer Datenträger nach einem der Ansprüche 5 bis 7, **dadurch gekennzeichnet, dass** der Datenträger als Schlüssel ausgebildet ist, der Informationen enthält.

## Claims

1. Method for avoiding impermissible use of software components for a computer installation or a control unit, having the following steps:
- a computer-readable data storage medium is provided which stores, in subsequently unalterable form, a) a unique hardware identifier for the data storage medium and which stores, in a useful data area, b) licence information (LI, LI1-LIn), c) at least one identification number (PIN) produced by means of an encryption algorithm from the hardware identifier (PSN) and the licence information (LI, LI1-LIn) and d) a full piece of run-time software and/or parameterization information and/or configuration information and/or applications,
- the authorization is checked by α) either decrypting the at least one identification number (PIN) using a decryption algorithm and thereby generating a unique hardware identifier (PSN), comparing the unique hardware identifier (PSN) obtained in this manner with the hardware identifier (PSN) stored on the computer-readable data storage medium, or β) encrypting the unique hardware identifier (PSN) and the licence information (PLI, LI1-LIn) on the computer-readable data storage medium using an encryption algorithm and generating the identification number (PIN), and comparing the identification number (PIN) obtained in this manner with the identification number stored on the computer-readable data storage medium,
- use of the software component is permitted if the comparison has a positive outcome.

2. Method according to Claim 1, **characterized in that** the computer-readable data storage medium also stores supplementary information (ZI, ZI1-ZIn) which is used to produce the identification number (PIN).

3. Method according to one of the preceding claims, **characterized in that** the data storage medium used is a memory card or an MMC memory card (MMC).

4. Method according to one of the preceding claims, **characterized in that** the data storage medium is in the form of a key which contains information.

5. Computer-readable data storage medium which:
- stores, in subsequently unalterable form, a) a unique hardware identifier (PSN) and which has:
- a useful data area which stores:
b) licence information (LI, LI1-LIn),
c) at least one identification number (PIN) produced by means of an encryption algorithm from the unique hardware identifier (PSN) and the licence information (LI, LI1-LIn),
d) a full piece of run-time software and/or parameterization information and/or configuration information and/or applications.

6. Computer-readable data storage medium according to Claim 5, **characterized in that** the computer-readable data storage medium also stores supplementary information (ZI, ZI1-ZIn) which has been used for producing the identification number (PIN).

7. Computer-readable data storage medium according to Claim 5 or 6, **characterized in that** the data storage medium is a memory card or an MMC memory card (MMC).

8. Computer-readable data storage medium according to one of Claims 5 to 7, **characterized in that** the data storage medium is in the form of a key which contains information.

## Revendications

1. Procédé pour éviter l'utilisation sans autorisation de composants logiciels pour une installation informatique ou pour un appareil de commande, avec les étapes :
- fourniture d'un support de données qui est lisible par un ordinateur et sur lequel sont mémorisés a) de manière à ne plus pouvoir être modifié un identificateur de matériel univoque pour le support de données et dans une zone de données utiles b) des informations de licence (LI, LI1 à LIn), c) au moins un numéro d'identification (PIN) produit par un algorithme de cryptage à partir de l'identificateur de matériel (PSN) et des informations de licence (LI, LI1 à LIn) et d) un logiciel d'exécution complet et/ou des informations de paramétrage et/ou des informations de configuration et/ou des applications,
- vérification de l'autorisation par α) soit décryptage du ou des numéros d'identification (PIN) à l'aide d'un algorithme de décryptage et ainsi production d'un identificateur de matériel univoque (PSN), comparaison de l'identificateur de matériel univoque (PSN) ainsi obtenu et de l'identificateur de matériel univoque (PSN) mémorisé sur le support de données lisible par ordinateur, β) soit cryptage de l'identificateur de matériel univoque (PSN) et des informations de licence (PLI, LI1 à LIn) sur le support de données lisible par ordinateur à l'aide d'un algorithme de cryptage et production du numéro d'identification (PIN), comparaison du numéro d'identification (PIN) ainsi obtenu et du numéro d'identification mémorisé sur le support de données lisible par ordinateur,
- autorisation de l'utilisation du composant logiciel si la comparaison donne un résultat positif.

2. Procédé selon la revendication 1, **caractérisé par le fait que** des informations supplémentaires (ZI, ZI1 à ZIn) qui sont utilisées pour la production du numéro d'identification (PIN) sont aussi enregistrées sur le support de données lisible par ordinateur.

3. Procédé selon l'une des revendications précédentes, **caractérisé par le fait que** l'on utilise comme support de données une Memory-Card ou une carte mémoire MMC (MMC).

4. Procédé selon l'une des revendications précédentes, **caractérisé par le fait que** le support de données est conçu comme une clé qui contient des informations.

5. Support de données lisible par ordinateur, sur lequel sont mémorisés
- de manière à ne plus pouvoir être modifié a) un identificateur de matériel univoque (PSN), et
- dans une zone de données utiles
b) des informations de licence (LI, LI1 à LIn),
c) au moins un numéro d'identification (PIN) produit par un algorithme de cryptage à partir de l'identificateur de matériel (PSN) et des informations de licence (LI, LI1 à LIn),
d) un logiciel d'exécution complet et/ou des informations de paramétrage et/ou des informations de configuration et/ou des applications.

6. Support de données lisible par ordinateur selon la revendication 5, **caractérisé par le fait que** des informations supplémentaires (ZI, ZI1 à ZIn) qui sont utilisées pour la production du numéro d'identification (PIN) sont aussi enregistrées sur le support de données lisible par ordinateur.

7. Support de données lisible par ordinateur selon la revendication 5 ou 6, **caractérisé par le fait que** le support de données est une Memory-Card ou une carte mémoire MMC (MMC).

8. Support de données lisible par ordinateur selon l'une des revendications 5 à 7, **caractérisé par le fait que** le support de données est conçu comme une clé qui contient des informations.
